# FASCICULE DE BREVET EUROPEEN

(11) **EP 2 420 692 B1**
(45) Date de publication et mention de la délivrance du brevet: **18.09.2013**
(21) Numéro de dépôt: 11167685.4
(22) Date de dépôt: 26.05.2011
(51) Int. Cl.: F16D 65/14, F16D 121/02, F16D 121/14, F16D 125/36

(54) **Cartouche d'actionneur mécanique de frein de véhicule automobile**
Einsatz für eine mechanische Bremsbetätigungsvorrichtung eines Fahrzeugs
Cartridge of a mechanical actuator of a vehicle brake

(30) Priorité: 16.08.2010 FR 1003375
(43) Date de publication de la demande: 22.02.2012
(73) Titulaire: Robert Bosch GmbH, 70442 Stuttgart (DE)
(72) Inventeur: Mahoudeaux, Roger, 93150 Le Blanc Mesnil (FR); Laurencin, Xavier, 63000 Clermont Ferrand (FR)

(56) Documents cités:
- EP-A1- 1 757 836
- EP-A1- 1 936 227
- WO-A1-2009/016676
- US-A- 5 060 765

## Description

La présente invention concerne les dispositifs de freinage de véhicule automobile, notamment les dispositifs comportant un actionneur mécanique de frein à main.

Un tel dispositif de freinage comporte de manière classique un vérin hydraulique destiné à appliquer une plaquette de frein sur un disque de frein solidaire en rotation avec une roue du véhicule. Le vérin hydraulique comporte un cylindre de vérin et un piston de vérin susceptible de coulisser dans le cylindre.

Habituellement, le piston de vérin est commandé en translation par des moyens rotatifs de commande, par l'intermédiaire de moyens de transformation de la rotation de ces moyens de commande en translation du piston. Ces moyens de transformation sont portés par une cartouche d'actionneur mécanique de frein, destinée à être agencée dans le cylindre de vérin entre les moyens rotatifs de commande et le piston.

Ainsi, on connaît déjà dans l'état de la technique, notamment d'après ITTO 2001 0681 (A1), une cartouche du type comportant :
- un corps de cartouche, de forme générale de révolution autour d'un axe, solidaire en rotation avec le cylindre,
- un arbre de commande, logé dans le corps de cartouche, d'une part solidaire en rotation avec un plateau rotatif de commande, et d'autre part destiné à être solidarisé en rotation avec les moyens rotatifs de commande,
- un plateau de poussée, logé dans le corps de cartouche, coopérant d'une part avec le plateau de commande par l'intermédiaire de moyens de transformation de la rotation du plateau de commande en translation du plateau de poussée, et destiné d'autre part à coopérer avec le piston de vérin pour entraîner en translation ce piston de vérin,
- des moyens élastiques de compression du plateau de poussée vers le plateau de commande,
- une cage de maintien des moyens élastiques, les moyens élastiques s'étendant entre un premier siège porté par la cage et un second siège porté par le plateau de poussée,
dans laquelle :
- le corps de cartouche comporte au moins une saillie d'accrochage de la cage sur le corps, et la cage comporte au moins une patte axiale, comprenant un orifice d'accrochage susceptible de coopérer avec la saillie d'accrochage pour accrocher cette cage sur le corps de cartouche,
- la cage est mobile en rotation autour de l'axe du corps de cartouche, entre une position d'accrochage, dans laquelle l'orifice d'accrochage coopère avec la saillie d'accrochage, et une position de libération dans laquelle la cage est libérée du corps,
- le corps de cartouche comprend au moins une première butée circonférentielle de limitation de la rotation de la cage, la patte axiale de la cage étant susceptible de coopérer avec la première butée de limitation lorsque la cage se trouve dans sa position de libération.

Lors du stockage ou du montage de la cartouche dans le cylindre, les moyens élastiques de compression sont maintenus dans la cartouche grâce à la cage, qui est accrochée sur le corps de cartouche.

Lorsque la cartouche est insérée dans le cylindre, on fait tourner la cage depuis sa position accrochée avec le corps jusqu'à sa position de libération de ce corps. Lors de ce changement de position, la patte axiale se déforme par léger écartement radial, en montant en appui sur la saillie d'accrochage.

Cette patte axiale est habituellement munie d'un crochet, destiné à coopérer avec une ouverture, par exemple une rainure périphérique, ménagée sur le cylindre du vérin. Ainsi, lorsque la patte axiale est en appui sur la saillie d'accrochage, le crochet coopère avec l'ouverture correspondante, si bien que la cage est accrochée avec le cylindre.

On notera que, lorsque la cage est accrochée avec le cylindre, la patte est en appui sur une surface de portée réduite, constituée de la saille d'accrochage, de taille réduite. Ainsi, il existe un risque de décrochage de la patte, ou de déformation de cette patte, qui conduirait à une usure prématurée de la cage.

L'invention a notamment pour but d'améliorer la fiabilité d'une telle cartouche, sans modifier les dimensions générales de la cartouche, qui sont imposées par son environnement.

A cet effet, l'invention a pour objet une cartouche d'actionneur mécanique de frein du type précité, dans laquelle le corps de cartouche comporte une saillie formant rampe, adjacente à la première butée de limitation, telle que, dans la position de libération de la cage, la patte axiale est en appui radialement à la fois sur la saillie d'accrochage et sur la rampe.

Grâce à cette saillie formant rampe, la patte axiale est en appui sur deux portées (la saillie d'accrochage et la rampe) au lieu d'une seule lorsque la cage est dans sa position de libération. Ainsi, dans cette position de libération, la patte axiale est plus stable, et ne risque pas de se décrocher intempestivement du cylindre lorsque la cartouche est insérée dans ce cylindre.

En outre, cette saillie étant adjacente à la première butée de limitation, elle renforce cette première butée de limitation, lui permettant de résister à des efforts plus importants qu'une butée de limitation d'une cartouche classique.

Une cartouche d'actionneur mécanique de frein selon l'invention peut en outre comporter l'une ou plusieurs des caractéristiques suivantes :
- Le corps de cartouche comprend au moins une seconde butée circonférentielle de limitation de la rotation de la cage vers sa position d'accrochage. Une telle butée interdit une rotation de la cage dans le sens opposé à la rotation vers sa position de libération.
- Le corps de cartouche comprend au moins une saille radiale délimité circonférentiellement par les première et seconde butées circonférentielles.
- La saillie radiale du corps de cartouche comporte une encoche axiale destinée à coopérer avec un relief axial complémentaire du plateau de poussée, de sorte que le corps de cartouche et le plateau de poussée sont solidaires en rotation.
- L'encoche axiale étant délimitée circonférentiellement par des première et seconde parois, la distance circonférentielle entre la première paroi et la première butée est inférieure à la distance circonférentielle entre la seconde paroi et la seconde butée. La seconde butée est donc particulièrement renforcée pour résister aux efforts.
- Le corps de cartouche est forgé.
- La saillie d'accrochage est délimité circonférentiellement par, d'une part, une rampe coopérant avec la patte axiale de la cage lorsque cette cage se déplace angulairement vers sa position de libération, et d'autre part un décrochement formant une butée destinée à coopérer avec la patte axiale afin d'empêcher un déplacement angulaire opposé au déplacement angulaire vers sa position de libération.
- Les moyens de transformation de la rotation du plateau de commande en translation du plateau de poussée comportent un premier sillon circonférentiel ménagé dans le plateau de commande, formant une rampe circonférentielle, un second sillon circonférentiel ménagé dans le plateau de poussée, et au moins une bille logée entre les premier et second sillons circonférentiels.

L'invention à également pour objet un dispositif de freinage de véhicule automobile, du type comportant :
- un vérin hydraulique de frein de véhicule automobile, comprenant un cylindre et un piston de vérin,
- une cartouche d'actionneur mécanique tel que défini précédemment, la cartouche étant logée dans le cylindre de sorte que le corps de cartouche soit solidaire en rotation avec le cylindre et que le plateau de poussée coopère avec le piston de vérin de façon à être susceptible d'entraîner en translation ce piston de vérin.

De préférence, la patte axiale de la cage de la cartouche d'actionneur comporte un crochet, susceptible de coopérer avec une ouverture ménagée sur le cylindre du vérin, de façon à maintenir la cage sur le cylindre lorsqu'elle est dans sa position de libération.

De préférence également, le plateau de poussée est solidaire d'un premier organe de liaison formant écrou, destiné à coopérer avec un second organe de liaison complémentaire formant vis, solidaire du piston de vérin.

L'invention sera mieux comprise à la lecture de la description qui va suivre, donnée uniquement à titre d'exemple et faite en se référant aux dessins annexés dans lesquels :
- la figure 1 est une vue en coupe axiale d'un dispositif de freinage selon un exemple de mode de réalisation de l'invention ;
- les figures 2 et 3 sont des vues, respectivement en perspective et en coupe transversale, d'un corps d'une cartouche équipant le dispositif de freinage de la figure 1 ;
- les figures 4 et 5 sont des vues en perspective du corps de cartouche des figures 2 et 3 et d'une cage de cartouche, respectivement en positions accrochée et libérée de la cage.

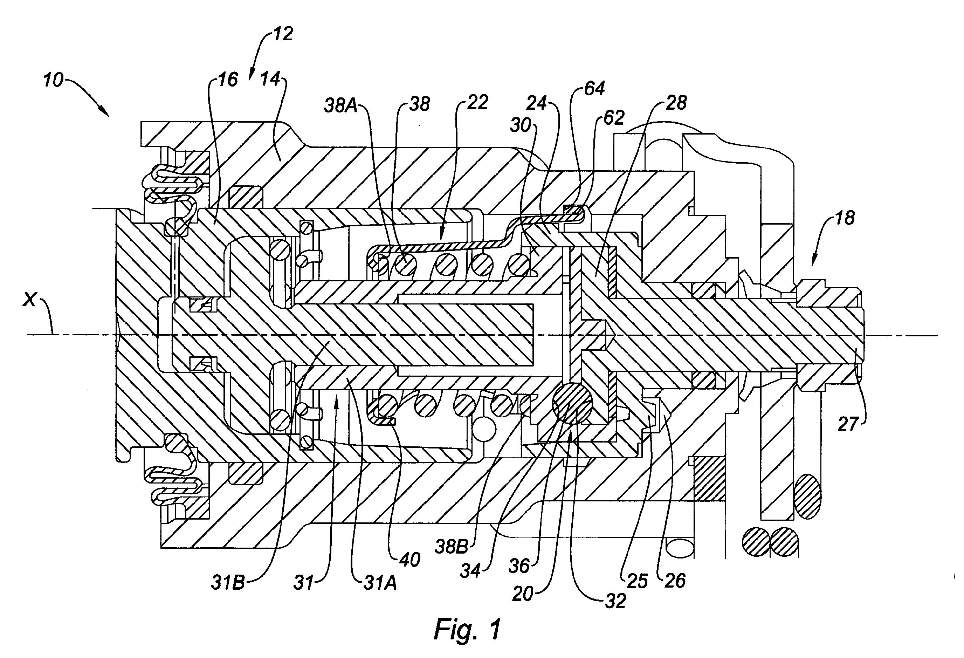

On a représenté sur la figure 1 un dispositif de freinage 10 de véhicule automobile selon un exemple de mode de réalisation de l'invention.

Le dispositif de freinage 10 comporte un vérin hydraulique 12, destiné à appliquer une plaquette de frein sur un disque de frein solidaire en rotation avec une roue du véhicule. Le vérin 12 comprend un cylindre de vérin 14 et un piston de vérin 16 destiné à coulisser dans le cylindre 14, de formes générales de révolution autour d'un axe X.

Le piston 16 de vérin est commandé en translation par des moyens rotatifs de commande 18, par l'intermédiaire de moyens 20 de transformation de la rotation de ces moyens de commande 18 en translation du piston 16. Ces moyens de transformation 20 sont portés par une cartouche 22 d'actionneur mécanique de frein, agencée dans le cylindre de vérin 14 entre les moyens rotatifs de commande 18 et le piston 16.

La cartouche 22 comporte un corps 24 de cartouche, de forme générale de révolution autour de l'axe X. De préférence, ce corps 24 de cartouche est fabriquée par forgeage.

Ce corps 24 comporte au moins un plot 25, destiné à coopérer avec un orifice complémentaire 26 ménagé dans le cylindre 14, de façon à solidariser le corps 24 avec le cylindre 14 lorsque la cartouche 22 est insérée dans le cylindre 14.

La cartouche 22 comporte également un arbre de commande 27, destiné à être solidarisé en rotation avec les moyens rotatifs de commande 18, logé en partie dans le corps 24 de cartouche. Cet arbre de commande 27 est par ailleurs solidaire en rotation avec un plateau rotatif de commande 28 logé dans le corps 24. Par exemple, l'arbre de commande 27 et le plateau rotatif de commande 28 sont venus de matière.

La cartouche 22 comporte en outre un plateau de poussée 30, solidaire en translation selon l'axe X avec le piston 16.

De préférence, le plateau de poussée 30 est relié au piston 16 par l'intermédiaire de moyens 31 de rattrapage de l'usure de la plaquette de frein. Ces moyens de rattrapage d'usure 31 comprennent un premier organe 31A formant écrou allongé, solidaire du plateau de poussée 30, par exemple venu de matière avec ce plateau de poussée 30, et un second organe 31 B formant vis, coopérant avec l'écrou 31A, solidaire du piston 16. Les moyens 31 de rattrapage d'usure ont donc une longueur variable, dépendant du vissage de la vis 31 B dans l'écrou 31A, ce qui permet d'allonger la distance entre le plateau de poussée 30 et le piston 16 en fonction de l'usure de la plaquette de frein.

Afin d'être entraîné en translation selon la direction de l'axe X, le plateau de poussée 30 coopère avec le plateau de commande 28 par l'intermédiaire des moyens 20 de transformation de la rotation du plateau de commande 28 en translation du plateau de poussée 30.

Les moyens de transformation 20 comportent un premier sillon circonférentiel 32 ménagé dans le plateau de commande 28, et un second sillon circonférentiel 34 ménagé dans le plateau de poussée 30 en regard du premier sillon circonférentiel 32. Les moyens de transformation 20 comprennent également au moins une, de préférence une pluralité, bille de roulement 36 logée entre les premier 32 et second 34 sillons circonférentiels.

Au moins l'un des premier 32 et second 34 sillons circonférentiels forme une rampe circonférentielle. Du fait de cette rampe circonférentielle, lorsque le plateau de commande 28 entre en rotation, entraîné par les moyens rotatifs de commande 18, chaque bille 36 roule dans les premier 32 et second 34 sillons le long de la rampe circonférentielle, si bien que le plateau de poussée 30 est déplacé en translation selon la direction de l'axe X.

Afin de maintenir chaque bille 36 entre les premier 32 et second 34 sillons, la cartouche 22 comporte des moyens élastiques 38 de compression du plateau de poussée 30 vers le plateau de commande 28, comprenant par exemple un ressort de compression.

Ces moyens élastiques 38 sont maintenus dans la cartouche 22 grâce à une cage 40 de maintien de ces moyens élastiques 38. Ainsi, les moyens élastiques 38 s'étendent entre un premier siège 38A porté par la cage 40 et un second siège 38B porté par le plateau de poussée 30.

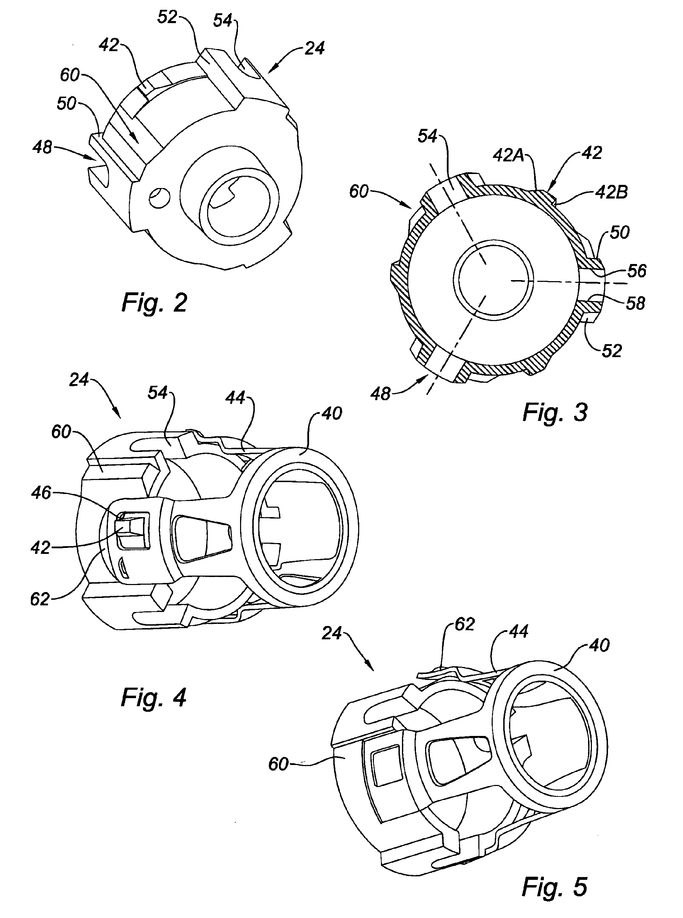

Le corps 24 de cartouche et la cage 40 sont représentés plus en détail sur les figures 2 à 5.

Le corps 24 de cartouche comporte au moins un, de préférence trois, saillies d'accrochage 42 de la cage 40 sur le corps 24. La cage 40 comporte au moins une, de préférence trois, patte axiale 44, comprenant un orifice d'accrochage 46 destiné à coopérer avec la saillie d'accrochage 42 correspondante pour accrocher cette cage 40 sur le corps 24 de cartouche, comme cela est représenté sur la figure 4. Chaque patte 44 est élastiquement déformable radialement.

Comme cela est représenté sur les figures 2 et 3, chaque saillie d'accrochage 42 est délimitée circonférentiellement par, d'une part, une rampe 42A et, d'autre part, un décrochement 42B.

Ainsi, chaque saillie d'accrochage 42 autorise la rotation de la cage 40 dans un premier sens, dans lequel la patte axiale 44 correspondante coopère avec la rampe 42A, et interdit la rotation de la cage 40 dans un second sens opposé au premier, dans lequel le décrochement 42B forme une butée coopérant avec la patte axiale 44.

En effet, la cage 40 est mobile en rotation autour de l'axe X, entre une position d'accrochage (représentée sur la figure 4), dans laquelle chaque orifice d'accrochage 46 coopère avec la saillie d'accrochage 42 correspondante, et une position de libération (représentée sur la figure 5) dans laquelle la cage 40 n'est pas accrochée au corps 24.

On notera que le corps 24 de cartouche comprend au moins une, de préférence trois, saille radiale 48, délimitée circonférentiellement par des première 50 et seconde 52 butées circonférentielles de limitation de la rotation de la cage 40.

Chaque patte axiale 44 de la cage 40 est susceptible de coopérer avec la première butée de limitation 50 correspondante lorsque la cage 40 se trouve dans sa position de libération, et avec la seconde butée de limitation 52 correspondante lorsque la cage se trouve dans sa position d'accrochage. Ainsi, la seconde butée de limitation 52 est destinée à coopérer avec la patte axiale 44 correspondante afin d'empêcher une rotation opposée à la rotation vers la position de libération de la cage 40.

On notera que chaque saillie radiale 48 du corps 24 comporte une encoche axiale 54 destinée à coopérer avec un relief axial complémentaire du plateau de poussée 30, afin de solidariser en rotation ce corps 24 de cartouche et ce plateau de poussée 30.

L'encoche axiale 54 est délimitée circonférentiellement par des première 56 et seconde 58 parois, la distance circonférentielle entre la première paroi 56 et la première butée 50 étant inférieure à la distance circonférentielle entre la seconde paroi 58 et la seconde butée 52. En d'autres termes, la seconde butée 52 est davantage renforcée que la première butée 50, et peut donc supporter des efforts plus importants.

Le corps 24 de cartouche comporte par ailleurs au moins une, de préférence trois, saillie 60 formant rampe, adjacente à la première butée de limitation 50. En plus de renforcer la première butée de limitation 50, cette rampe 60 forme un support radial pour la patte axiale 44 correspondante lorsque la cage 40 est dans sa position de libération.

Ainsi, dans cette position de libération de la cage 40, chaque patte axiale 44 est en appui radialement à la fois sur la saillie d'accrochage 42 et la rampe 60 correspondantes, comme cela est représenté sur la figure 5. Cette patte axiale 44, en appui radial sur deux portées est donc plus stable que si elle n'était en appui que sur la saillie d'accrochage 42.

On notera que chaque patte axiale 44 est munie d'un crochet 62, destiné à coopérer avec une ouverture 64, par exemple une rainure périphérique, ménagée sur le cylindre 14 du vérin 12, de façon à maintenir la cage 40 sur le cylindre 14 lorsqu'elle est dans sa position de libération.

En effet, en position de libération de la cage 40, chaque patte 44 est en appui radial sur la saillie d'accrochage 42 et la rampe 60 correspondants, et est donc décalée radialement par rapport à sa position lorsque la cage 40 est en position d'accrochage. C'est lorsque cette patte 44 est ainsi décalée radialement que le crochet 62 coopère avec l'ouverture 64 correspondante.

Au cours du stockage ou du montage, la cage 40 est maintenue sur le corps 24 de cartouche grâce aux saillies d'accrochage 42. Lorsque la cartouche 22 est insérée dans le cylindre 14 de vérin, la cage 40 est tournée jusqu'à sa position de libération, dans laquelle elle n'est plus accrochée au corps 24 de cartouche, mais au cylindre 14.

Ainsi, dans la position de libération, les efforts élastiques générés par les moyens élastiques 38 sont reportés au cylindre 14, d'une part par l'intermédiaire des crochets 62, et d'autre part par l'intermédiaire de l'empilement comprenant le plateau de poussée 30, le plateau de commande 28 et le corps 24 de cartouche.

La cartouche 22 reste ainsi accrochée au cylindre 14 de manière simple, fiable et efficace.

On notera enfin que l'invention n'est pas limitée au mode de réalisation précédemment décrit, et pourrait subir des modifications sans sortir du cadre des revendications.

### Liste des références.

- 10 :: Dispositif de freinage.
- 12 :: Vérin hydraulique.
- 14 :: Cylindre du vérin 12.
- 16 :: Piston du vérin 12.
- 18 :: Moyens rotatifs de commande.
- 20 :: Moyens de transformation de rotation en translation.
- 22 :: Cartouche d'actionneur mécanique de frein de véhicule automobile.
- 24 :: Corps de la cartouche 22.
- 25 :: Plot de solidarisation en rotation du corps 24 avec le cylindre 14.
- 26:: Orifice de solidarisation en rotation du corps 24 avec le cylindre 14, coopérant avec le plot 25.
- 27 :: Arbre de commande.
- 28 :: Plateau de commande.
- 30 :: Plateau de poussée.
- 31 :: Moyens de rattrapage de l'usure de la plaquette de frein.
- 31A :: Premier organe de rattrapage d'usure formant écrou allongé.
- 31B :: Second organe de rattrapage d'usure formant vis.
- 32 :: Premier sillon circonférentiel, ménagé dans le plateau de commande 28.
- 34 :: Second sillon circonférentiel 34, ménagé dans le plateau de poussée 30.
- 36 :: Bille de roulement.
- 38 :: Moyens élastiques de compression.
- 38A, 38B :: Premier et second siège des moyens élastiques.
- 40 :: Cage.
- 42 :: Saillie d'accrochage.
- 42A :: Rampe de la saillie 42.
- 42B :: Décrochement de la saillie 42.
- 44.: Patte axiale.
- 46 :: Ouverture d'accrochage.
- 48 :: Saille radiale.
- 50 :: Première butée circonférentielle.
- 52 :: Seconde butée circonférentielle.
- 54 :: Encoche axiale.
- 56, 58 :: Première et seconde parois de l'encoche axiale.
- 60 :: Saillie formant rampe.
- 62 :: Crochet.
- 64 :: Rainure périphérique.

## Revendications

1. Cartouche (22) d'actionneur mécanique de frein de véhicule automobile, du type comportant :
- un corps (24) de cartouche, de forme générale de révolution autour d'un axe (X),
- un plateau rotatif de commande (28), logé dans le corps (24) de cartouche,
- un plateau de poussée (30), logé dans le corps (24) de cartouche, coopérant avec le plateau de commande (28) par l'intermédiaire de moyens (20) de transformation de la rotation du plateau de commande (28) en translation du plateau de poussée (30),
- des moyens élastiques (38) de compression du plateau de poussée (30) vers le plateau de commande (28),
- une cage (40) de maintien des moyens élastiques (38), les moyens élastiques (38) s'étendant entre un premier siège (38A) porté par la cage (40) et un second siège (38B) porté par le plateau de poussée (38B),
dans laquelle :
- le corps (24) de cartouche comporte au moins une saillie (42) d'accrochage de la cage (40) sur le corps (24), et la cage (40) comporte au moins une patte axiale (44), comprenant un orifice d'accrochage (46) susceptible de coopérer avec la saillie d'accrochage (42) pour accrocher cette cage (40) sur le corps (24) de cartouche,
- la cage (40) est mobile en rotation autour de l'axe (X) du corps (24) de cartouche, entre une position d'accrochage, dans laquelle l'orifice d'accrochage (46) coopère avec la saillie d'accrochage (42), et une position de libération dans laquelle la cage (40) est libérée du corps (24),
- le corps (24) de cartouche comprenant au moins une première butée circonférentielle (50) de limitation de la rotation de la cage (40), la patte axiale (44) de la cage (40) étant susceptible de coopérer avec la première butée de limitation (50) lorsque la cage (40) se trouve dans sa position de libération,
**caractérisée en ce que** le corps (24) de cartouche comporte une saillie formant rampe (60), adjacente à la première butée de limitation (50), telle que, dans la position de libération de la cage (40), la patte axiale (44) est en appui radialement à la fois sur la saillie d'accrochage (42) et sur la saillie formant rampe (60).

2. Cartouche (22) d'actionneur mécanique de frein selon la revendication 1, dans lequel le corps (24) de cartouche comprend au moins une saille radiale (48) délimitée circonférentiellement par la première butée circonférentielle (50) et par une seconde butée circonférentielle (52) de limitation de la rotation de la cage (40) vers sa position d'accrochage.

3. Cartouche (22) d'actionneur mécanique de frein selon la revendication 2, dans lequel la saillie radiale (48) du corps (24) de cartouche comporte une encoche axiale (54) destinée à coopérer avec un relief axial complémentaire du plateau de poussée (30), de sorte que le corps (24) de cartouche et le plateau de poussée (30) sont solidaires en rotation.

4. Cartouche (22) d'actionneur mécanique de frein selon la revendication 3, dans lequel, l'encoche axiale (54) étant délimitée circonférentiellement par des première (56) et seconde (58) parois, la distance circonférentielle entre la première paroi (56) et la première butée (50) est inférieure à la distance circonférentielle entre la seconde paroi (58) et la seconde butée (52).

5. Cartouche (22) d'actionneur mécanique de frein selon l'une quelconque des revendications précédentes, dans lequel le corps (24) de cartouche est forgé.

6. Cartouche (22) d'actionneur mécanique de frein selon l'une quelconque des revendications précédentes, dans lequel la saillie d'accrochage (42) est délimité circonférentiellement par, d'une part, une rampe (42A) coopérant avec la patte axiale (44) de la cage (40) lorsque cette cage (40) est en rotation vers sa position de libération, et d'autre part un décrochement (42B) formant une butée destinée à coopérer avec la patte axiale (44) afin d'empêcher une rotation opposée à la rotation vers la position de libération de la cage (40).

7. Cartouche (22) d'actionneur mécanique de frein selon l'une quelconque des revendications précédentes, dans lequel les moyens (20) de transformation de la rotation du plateau de commande (28) en translation du plateau de poussée (30) comportent un premier sillon circonférentiel (32) ménagé dans le plateau de commande (28), un second sillon circonférentiel (34) ménagé dans le plateau de poussée (30) en regard du premier sillon circonférentiel (32), et au moins une bille (36) logée entre les premier (32) et second (34) sillons circonférentiels, l'un au moins des premier (32) et second (34) sillons circonférentiels formant une rampe circonférentielle.

8. Dispositif (10) de freinage de véhicule automobile, du type comportant :
- un vérin hydraulique (12) de frein de véhicule automobile, comprenant un cylindre (14) et un piston (16) de vérin,
- une cartouche d'actionneur mécanique (22) selon l'une quelconque des revendications 1 à 7,
la cartouche (22) étant logée dans le cylindre (14) de sorte que le corps (24) de cartouche soit solidaire en rotation avec le cylindre (14) et que le plateau de poussée (30) coopère avec le piston de vérin (16) de façon à être susceptible d'entraîner en translation ce piston de vérin (16).

9. Dispositif (10) de freinage de véhicule automobile selon la revendication 8, dans lequel la patte axiale (44) de la cage (40) de la cartouche d'actionneur (22) comporte un crochet (62), susceptible de coopérer avec une ouverture (64) ménagée dans le cylindre (14) du vérin, de façon à maintenir la cage (40) dans le cylindre (14) lorsqu'elle est dans sa position de libération.

10. Dispositif (10) de freinage de véhicule automobile selon la revendication 8 ou 9, dans lequel le plateau de poussée (30) est solidaire d'un premier organe de liaison formant écrou (31A), destiné à coopérer avec un second organe de liaison complémentaire formant vis (31 B), solidaire du piston de vérin (16).

## Patentansprüche

1. Einsatz (22) für eine mechanische Bremsbetätigungsvorrichtung eines Kraftfahrzeugs, jener Art, die Folgendes umfasst:
- einen Einsatzkörper (24) mit einer um eine Achse (X) allgemein rotationssymmetrischen Form,
- eine Antriebsdrehplatte (28), die in dem Einsatzkörper (24) angeordnet ist,
- eine Druckplatte (30), die in dem Einsatzkörper (24) angeordnet ist und über Mittel (20) zur Umwandlung der Drehung der Antriebsplatte (28) in eine translatorische Bewegung der Druckplatte (30) mit der Antriebsplatte (28) zusammenwirkt,
- flexible Mittel (38) zum Drücken der Druckplatte (30) zur Antriebsplatte (28),
- einen Käfig (40) zum Halten der flexiblen Mittel (38), wobei sich die flexiblen Mittel (38) zwischen einem ersten Sitz (38A), der vom Käfig (40) getragen wird, und einem zweiten Sitz (38B), der von der Druckplatte (38B) getragen wird, erstrecken,
wobei:
- der Einsatzkörper (24) mindestens einen Vorsprung (42) zur Befestigung des Käfigs (40) am Körper (24) umfasst, und der Käfig (40) mindestens eine axiale Lasche (44) umfasst, die eine Befestigungsöffnung (46) aufweist, die mit dem Befestigungsvorsprung (42) zur Befestigung dieses Käfigs (40) am Einsatzkörper (24) zusammenwirken kann,
- der Käfig (40) um die Achse (X) des Einsatzkörpers (24) zwischen einer Befestigungsposition, in der die Befestigungsöffnung (46) mit dem Befestigungsvorsprung (42) zusammenwirkt, und einer Freigabeposition, in der der Käfig (40) vom Körper (24) freigegeben ist, drehbeweglich ist,
- der Einsatzkörper (24) mindestens einen ersten Umfangsanschlag (50) zur Begrenzung der Drehung des Käfigs (40) aufweist, wobei die axiale Lasche (44) des Käfigs (40) mit dem ersten Begrenzungsanschlag (50) zusammenwirken kann, wenn sich der Käfig (40) in seiner Freigabeposition befindet,
**dadurch gekennzeichnet, dass** der Einsatzkörper (24) einen eine Rampe bildenden Vorsprung (60) neben dem ersten Begrenzungsanschlag (50) umfasst, so dass, wenn sich der Käfig (40) in der Freigabeposition befindet, sich die axiale Lasche (44) sowohl mit dem Befestigungsvorsprung (42) als auch mit dem eine Rampe bildenden Vorsprung (60) radial in Anlage befindet.

2. Einsatz (22) für eine mechanische Bremsbetätigungsvorrichtung nach Anspruch 1, wobei der Einsatzkörper (24) mindestens einen radialen Vorsprung (48) aufweist, der durch den ersten Umfangsanschlag (50) und durch einen zweiten Umfangsanschlag (52) zur Begrenzung der Drehung des Käfigs (40) in seine Befestigungsposition umfangsmäßig begrenzt ist.

3. Einsatz (22) für eine mechanische Bremsbetätigungsvorrichtung nach Anspruch 2, wobei der radiale Vorsprung (48) des Einsatzkörpers (24) eine axiale Kerbe (54) aufweist, die dazu bestimmt ist, mit einer komplementären axialen Ausformung der Druckplatte (30) zusammenzuwirken, so dass der Einsatzkörper (24) und die Druckplatte (30) drehfest verbunden sind.

4. Einsatz (22) für eine mechanische Bremsbetätigungsvorrichtung nach Anspruch 3, wobei, da die axiale Kerbe (54) durch eine erste (56) und eine zweite (58) Wand umfangsmäßig begrenzt ist, der Umfangsabstand zwischen der ersten Wand (56) und dem ersten Anschlag (50) geringer als der Umfangsabstand zwischen der zweiten Wand (58) und dem zweiten Anschlag (52) ist.

5. Einsatz (22) für eine mechanische Bremsbetätigungsvorrichtung nach einem der vorhergehenden Ansprüche, wobei der Eisatzkörper (24) geschmiedet ist.

6. Einsatz (22) für eine mechanische Bremsbetätigungsvorrichtung nach einem der vorhergehenden Ansprüche, wobei der Befestigungsvorsprung (42) einerseits durch eine Rampe (42A), die mit der axialen Lasche (44) des Käfigs (40) zusammenwirkt, wenn sich dieser Käfig (40) in Drehung in seine Freigabeposition befindet, und andererseits durch einen Absatz (42B), der einen Anschlag bildet, der zum Zusammenwirken mit der axialen Lasche (44) bestimmt ist, um eine der Drehung in die Freigabeposition entgegengesetzte Drehung des Käfigs (40) zu verhindern, umfangsmäßig begrenzt ist.

7. Einsatz (22) für eine mechanische Bremsbetätigungsvorrichtung nach einem der vorhergehenden Ansprüche, wobei die Mittel (20) zur Umwandlung der Drehung der Antriebsplatte (28) in eine translatorische Bewegung der Druckplatte (30) eine in der Antriebsplatte (28) ausgebildete erste Umfangsnut (32), eine in der Druckplatte (30) ausgebildete zweite Umfangsnut (34), die der ersten Umfangsnut (32) gegenüberliegt, und mindestens eine zwischen der ersten (32) und der zweiten (34) Umfangsnut angeordnete Kugel (36) umfassen, wobei die erste (32) und/oder die zweite (34) Umfangsnut eine Umfangsrampe bilden.

8. Bremsvorrichtung (10) für ein Kraftfahrzeug, jener Art, die Folgendes umfasst:
- einen hydraulischen Bremszylinder (12) für ein Kraftfahrzeug, der einen Rohrzylinder (14) und einen Kolben (16) des Zylinders aufweist,
- einen Einsatz (22) für eine mechanische Betätigungsvorrichtung nach einem der Ansprüche 1 bis 7,
wobei der Einsatz (22) so im Rohrzylinder (14) angeordnet ist, dass der Einsatzkörper (24) mit dem Rohrzylinder (14) drehfest verbunden ist und dass die Druckplatte (30) mit dem Kolben (16) des Zylinders dahingehend zusammenwirkt, diesen Kolben (16) des Zylinders translatorisch antreiben zu können.

9. Bremsvorrichtung (10) für ein Kraftfahrzeug nach Anspruch 8, wobei die axiale Lasche (44) des Käfigs (40) des Einsatzes (22) der Betätigungsvorrichtung einen Haken (62) umfasst, der so mit einer Öffnung (64), die im Rohrzylinder (14) des Zylinders vorgesehen ist, zusammenwirken kann, dass der Käfig (40) im Rohrzylinder (14) gehalten wird, wenn er sich in seiner Freigabeposition befindet.

10. Bremsvorrichtung (10) für ein Kraftfahrzeug nach Anspruch 8 oder 9, wobei die Druckplatte (30) mit einem eine Mutter (31A) bildenden ersten Verbindungsglied fest verbunden ist, das dazu bestimmt ist, mit einem eine Schraube (31B) bildenden komplementären zweiten Verbindungsglied zusammenzuwirken, das mit dem Kolben (16) des Zylinders fest verbunden ist.

## Claims

1. Mechanical actuator cartridge (22) for a motor vehicle brake, of the type comprising:
- a cartridge body (24) with an overall shape having symmetry of revolution about an axis (X),
- a rotary control plate (28) housed in the cartridge body (24),
- a thrust plate (30), housed in the cartridge body (24), cooperating with the control plate (28) via means (20) for converting the rotational movement of the control plate (28) into a translational movement of the thrust plate (30),
- elastic means (38) for compressing the thrust plate (30) towards the control plate (28),
- a cage (40) for holding the elastic means (38), the elastic means (38) extending between a first seat (38A) borne by the cage (40) and a second seat (38B) borne by the thrust plate (38B),
in which:
- the cartridge body (24) comprises at least one projection (42) for attaching the cage (40) to the body (24), and the cage (40) comprises at least one axial tab (44) comprising an attachment orifice (46) capable of cooperating with the attachment projection (42) in order to attach this cage (40) to the cartridge body (24),
- the cage (40) is capable of rotational movement about the axis (X) of the cartridge body (24), between an attachment position in which the attachment orifice (46) cooperates with the attachment projection (42), and a release position in which the cage (40) is released from the body (24),
- the cartridge body (24) comprising at least a first circumferential stop (50) for limiting the rotation of the cage (40), the axial tab (44) of the cage (40) being capable of cooperating with the first limit stop (50) when the cage (40) is in its release position,
**characterized in that** the cartridge body (24) comprises a ramp-forming projection (60), adjacent to the first limit stop (50), such that when the cage (40) is in the release position, the axial tab (44) bears radially both against the attachment projection (42) and against the ramp-forming projection (60).

2. Mechanical actuator cartridge (22) for a brake according to Claim 1, in which the cartridge body (24) comprises at least one radial projection (48) delimited circumferentially by the first circumferential stop (50) and by a second circumferential stop (52) which limits the rotation of the cage (40) towards its attachment position.

3. Mechanical actuator cartridge (22) for a brake according to Claim 2, in which the radial projection (48) of the cartridge body (24) comprises an axial notch (54) intended to cooperate with a complementary axial relief of the thrust plate (30), such that the cartridge body (24) and the thrust plate (30) are coupled in rotation.

4. Mechanical actuator cartridge (22) for a brake according to Claim 3, in which, with the axial notch (54) being delimited circumferentially by first (56) and second (58) walls, the circumferential distance between the first wall (56) and the first stop (50) is less than the circumferential distance between the second wall (58) and the second stop (52).

5. Mechanical actuator cartridge (22) for a brake according to any one of the preceding claims, in which the cartridge body (24) is forged.

6. Mechanical actuator cartridge (22) for a brake according to any one of the preceding claims, in which the attachment projection (42) is delimited circumferentially by, on the one hand, a ramp (42A) cooperating with the axial tab (44) of the cage (40) when this cage (40) is rotating towards its release position, and, on the other hand, a step (42B) forming a stop intended to cooperate with the axial tab (44) in order to prevent a rotation opposite to the rotation towards the release position of the cage (40).

7. Mechanical actuator cartridge (22) for a brake according to any one of the preceding claims, in which the means (20) for converting the rotational movement of the control plate (28) into a translational movement of the thrust plate (30) comprise a first circumferential groove (32) formed in the control plate (28), a second circumferential groove (34) formed in the thrust plate (30) facing the first circumferential groove (32), and at least one ball (36) housed between the first (32) and second (34) circumferential grooves, at least one of the first (32) and second (34) circumferential grooves forming a circumferential ramp.

8. Motor vehicle braking device (10) of the type comprising:
- a motor vehicle brake hydraulic ram (12) comprising a ram cylinder (14) and a ram piston (16),
- a mechanical actuator cartridge (22) according to any one of Claims 1 to 7,
the cartridge (22) being housed in the cylinder (14) such that the cartridge body (24) is coupled in rotation with the cylinder (14) and such that the thrust plate (30) cooperates with the ram piston (16) so as to be capable of translationally moving this ram piston (16).

9. Motor vehicle braking device (10) according to Claim 8, in which the axial tab (44) of the cage (40) of the actuator cartridge (22) comprises a hook (62) capable of cooperating with an opening (64) formed in the cylinder (14) of the ram so as to hold the cage (40) in the cylinder (14) when it is in its release position.

10. Motor vehicle braking device (10) according to Claim 8 or 9, in which the thrust plate (30) is secured to a first connecting member forming a nut (31A), intended to cooperate with a complementary second connecting member forming a screw (31B), secured to the ram piston (16).
